(19) Europäisches Patentamt

European Patent Office

Office européen des brevets

(11) **EP 4 654 140 A1**

(12) **EUROPEAN PATENT APPLICATION**

(43) Date of publication:
**26.11.2025 Bulletin 2025/48**

(51) International Patent Classification (IPC):
*G06T 15/06* (2011.01)

(21) Application number: **25177725.6**

(22) Date of filing: **20.05.2025**

(52) Cooperative Patent Classification (CPC):
**G06T 15/06;** G06T 2210/56

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **23.05.2024 GB 202407364**

(71) Applicant: **Sony Interactive Entertainment Inc.
Tokyo 108-0075 (JP)**

(72) Inventor: **DIXON, Alex
London, W1F 7LP (GB)**

(74) Representative: **Gill Jennings & Every LLP
The Broadgate Tower
20 Primrose Street
London EC2A 2ES (GB)**

(54) **METHODS AND SYSTEMS FOR RENDERING AN IMAGE**

(57) There is provided a computer-implemented method of rendering an image using a point cloud, the method comprising: receiving a point cloud comprising a plurality of points, each point comprising an extent defined by a three-dimensional extent function, centred on a centre point; for each of a plurality of points in the point cloud, determining a bounding box enclosing the point; performing ray tracing from a camera view from which the image is to be rendered; determining one or more contributing points, which contribute to the colour of a pixel in the image, by determining an intersection of a ray with one or more bounding boxes enclosing the contributing points; and determining the colour of the pixel based on the contributing points.

FIG. 1

EP 4 654 140 A1

**Description**

**FIELD OF THE INVENTION**

The present invention relates to methods and systems for rendering an image. More specifically, the present invention relates to methods and systems for rendering an image on a computer in the context of a video game.

**BACKGROUND**

The use of meshes to represent three-dimensional (3D) models and scenes has been commonplace in computer graphics since the birth of the field, due to their conceptual simplicity and ease of rasterization. However, other representations, such as 3D "splatting" rendering techniques, have recently come to the fore. Such representations are known as "radiance fields" - 3D functions (fields) that evaluate to a colour and brightness (a radiance) of a particular point in a 3D scene.

3D Gaussian splatting (3DGS) is a radiance field-based rendering technique in which a scene is represented by the summation of many 3D Gaussian functions, distributed throughout 3D space. These individual functions are commonly known as "points", forming a "point cloud". Summing up the colour of each individual point and the level of opacity defined by its respective Gaussian function results in an image that can be displayed to the user. The placement of individual points can be done by a designer or developer, or can be generated by a machine learning process based on some input image, scene, mesh or concept.

However, when rendering points in a point cloud using methods known in the art, the points must be sorted from "front" to "back", relative to the position of the camera. This can be an expensive operation, as each point cloud can contain a vast number of points.

Further, in known methods, all of the points, once sorted, are rasterised - there is no way for the rendering process to ignore points which will not contribute to the colour of a particular pixel. All of the points are transformed and processed in the vertex and pixel stages of the graphics problem. This issue is known as "overdraw".

There is therefore a need for a method of rendering a point cloud which mitigates some of the above problems.

**SUMMARY OF INVENTION**

According to a first aspect, there is provided a computer-implemented method of rendering an image using a point cloud, the method comprising: receiving a point cloud comprising a plurality of points, each point comprising an extent defined by a three-dimensional extent function, centred on a centre point; for each of a plurality of points in the point cloud, determining a bounding box enclosing the point; performing ray tracing from a camera view from which the image is to be rendered; determining one or more contributing points, which contribute to the colour of a pixel in the image, by determining an intersection of a ray with one or more bounding boxes enclosing the contributing points; and determining the colour of the pixel based on the contributing points.

In general, the extent of the points in the point cloud can be defined by any 3D function, for instance, an exponential function, a polynomial function, or a logarithmic function. However, in some examples, the extent of the points will comprise a 3D Gaussian function. In some examples, different types of function may be used for different points, in order to generate varied visual effects, but in most examples the same type of function will be used for every point.

In typical examples, the value of the extent for a first point at a particular point in space, or the "rendering extent", defines the visibility of the first point at the particular point in space. Typically, it defines the shape of the point. Further, it typically defines the region over which the colour of the point is rendered.

The Gaussian function, often referred to simply as a Gaussian, is a mathematical function of the form

$$f(x) = \exp(-x^2),$$

where exp represents the exponential function. Such a Gaussian may be parametrised with various (real) constants in one dimension, giving the form

$$f(x) = a \exp(-(x-b)^2/c)$$

where a and b are arbitrary real constants, and c is an arbitrary non-zero real constant. The Gaussian may be extended into three dimensions with a parametrisation

$$f(x) = a \exp\left(-\frac{1}{2} x^T \Sigma^{-1} x\right)$$

where a is an arbitrary real constant, x is a 3D vector, $x^T$ is the transposition of x, and $\Sigma^{-1}$ is the inverse of a positive-definite $3 \times 3$ matrix.

The use of 3D Gaussians to define the extent of the points of the point cloud has several advantages. The Gaussian is a function with a well known and easily calculable derivative, which allows for efficient optimization of the point cloud to a desired input image. Further, Gaussians can be easily projected to the 2D plane, allowing for efficient rasterization and rendering of the final image.

The "camera" represents a point of view from which the image is rendered and from which the rays are traced. The camera view may define a field of view, which may be a vertical or horizonal field of view, or a view frustum. The camera may have a fixed position in 3D space, or may move.

Each of the bounding boxes may enclose at least one point of the point cloud. As the point may have an extent function which is equal to vanishing but non-zero values for large regions of 3D space, each bounding box may not fully enclose a point. Therefore, the determining a bounding box may comprise determining a bounding box centred on the point, enclosing a region where the extent function of the point is greater than a threshold value. The threshold value may be half the maximum value of the extent function, a quarter of the maximum value of the extent function, or any other sensible fraction thereof. The shape of the bounding box is not limited herein - a bounding box may comprise a classical cuboid shape, or it may comprise any arbitrary polyhedron or combination thereof.

Ray tracing is a computer graphics technique used to render images. It comprises sending "rays" from the "camera" into a 3D region comprising objects the ray may intersect with. The ray will typically be represented as a straight line in the 3D space, travelling from the camera until it intersects an object that it can interact with. In typical examples, the intersected object will be a mesh with some assigned texture and material properties, which will define the colour of or a colour contribution to a pixel in the final image. The ray typically will correspond to a single pixel in the output image.

The ray tracing in the claimed invention functions to detect intersection with the bounding boxes of the points, determining thereby which points will contribute to the colour of a particular pixel. This determination may take the form of determining which points to use in a traditional rasterization process. Alternatively, the method may further comprise iteratively accumulating a colour contribution from each contributing point, in order of proximity to the camera.

When performing a traditional rasterisation of a point cloud to render an image, the points must be sorted with respect to the camera in order to determine the order in which the points overlay each other in the final image. In such a rasterization-based approach, sorting the points front-to-back can be an expensive operation because data sets contain millions of points, which can be expensive to sort even with GPU acceleration. When using a ray tracing approach, however, the intersection of each ray is with substantially fewer points and the sorting is a much simpler problem. Additionally, the points may be stored in such a way that the process of determining the intersection produces a sorted list of points without an explicit sorting required.

Further still, as the data for each pixel is determined individually from the contributing points determined by intersection with a ray, and these contributing points are sorted front-to-back, the method may further comprise stopping the iterative accumulation when the accumulated colour contribution is fully opaque.

In this way, the rendering process can "early out", i.e. stop before considering each of the contributing points. This is because the accumulated colour is now fully opaque, meaning that any further points behind those already considered are completely occluded and cannot contribute. This may represent a significant saving in computational requirements as well as increasing the speed of the rendering process.

Optionally, the iterative accumulation is stopped when the opacity of the accumulated colour contribution is within an opacity threshold. In this way, once the colour is suitably close to being fully opaque, any further points added would have a very small effect, and can therefore be neglected. This may further increase the efficiency of the process. The opacity threshold may be 95% opaque, 99% opaque, or 99.9% opaque, or another suitable threshold value.

Each of the points in the point cloud may further comprise colour data defining colour over the extent. Therefore, the colour contribution of each corresponding point may comprise the colour of the contributing point at the location it intersects with the ray. The colour may be a uniform value for the whole extent of the point, such as specified by RGB values, HSV values or similar. These values may be encoded as floating point, rational or integer values. The colour may further comprise an alpha channel or opacity, being encoded by RGBA values, HSVA values or similar, allowing for transparent or semi-transparent colours.

In preferable examples, the colour is not uniform over the extent of the point. The colour may be defined by a function, such as a 1D function, 2D function or 3D function, such as a 3D function of position. This allows for the use of points with larger extents to create an equivalent image.

The use of a colour function that maps to the surface of an ellipsoid like a Gaussian simplifies the implementation and allows for colours to be defined with respect to the viewing angle of the point. Therefore, in some examples, the colour data comprises a spherical harmonic, and may be defined as a sum of spherical harmonics with varying coefficients. The coefficients may be 3D or 4D colour vectors, such as RGB or RGBA representations.

The contribution of each point to the final image depends upon, amongst other things, the position, colour and extent function of the point. However, it may be beneficial to further modify the impact of the points by decreasing the opacity the further the ray intersects from the centre. Therefore, the colour contribution may further comprise an exponential falloff in opacity calculated from the distance of the intersection of the ray from a centre of the contributing point.

In order to make the bounding box containing a point as accurate as possible, it may be advantageous for the faces of the box to be aligned with different vectors to the unit vectors of the 3D space. Therefore, the bounding boxes may be 3D oriented bounding boxes. An oriented bounding box is a bounding parallelepiped whose faces and edges are not parallel to the basis vectors of the frame in which they're defined.

In order to increase the performance of calculating intersections of rays, the oriented bounding boxes may be organised and stored in a particular fashion. Therefore, the method may further comprise determining at least one parent bounding box which contains at least one child bounding box; and wherein determining an intersection of the ray with one or more bounding boxes comprises first determining intersection of the ray with each of the one or more parent bounding boxes, and if the ray intersects the parent bounding box, determining intersection of the ray with the respective child bounding boxes. In this way, a lack of intersection with the parent bounding box implies no intersection with all of the respective child bounding boxes. Therefore, a one check can rule out intersection with more than one bounding box, improving the performance of the method.

One way of organising a parent/child bounding box set is to use a bounding volume hierarchy (BVH), which may comprise several layers of parents containing children which are in turn parents of other children, etc. Therefore, it may be that the bounding boxes form a bounding volume hierarchy, and determining an intersection of the ray comprises determining intersection of the ray with the bounding volume hierarchy. The use of a hierarchical organisation may further amplify the above-stated benefits of the parent/child organisation of bounding boxes. Further, the use of a precalculated BVH allows for the front-to-back evaluation of the points without sorting. For static scenes, the BVH does not have to be recomputed when the camera view changes. This is in contrast to sorting the points, which must be performed every time the camera view changes (for instance, when the camera moves).

As the result of the method is the rendering of a 2D image, it may be advantageous to pre-transform all of the points into screen space, in order to take advantage of GPU parallelisation or to avoid performing the same transformation more than once. Therefore, the method may further comprise determining representations of one or more points in screen space, wherein the points are transformed based on a position and a viewing angle of a camera; and wherein the colour of the pixel is determined based on the point representations of the contributing points.

To permit the efficient lookup of the colour of the point at the intersection with the ray, these representations in screen space may further comprise a screen space conic and screen space radius for each point. Further, the projection of the spherical harmonic may be precalculated also, such that the point representations comprise a screen space colour determined by projecting a 3D spherical harmonic into screen space. Precalculating screen space conics, radii and projected screen space colours increases the performance of the rendering method, as these calculations may otherwise have to be performed multiple times.

To further improve the performance of the rendering method, the point representations may be calculated using a shader and may be stored in a buffer for lookup. The calculation of these representations in parallel on the GPU can be more performant than other methods of calculation, such as on a CPU.

It is important that each point, in addition to extent, can be used to represent a variety of different visual effects. Therefore, in some examples, each point further comprises a 3D position, rotation and scale.

In order to efficiently render the image without needing to sort the points, the method may further comprise: receiving a bounding volume hierarchy corresponding to the points in the point cloud, wherein each point is enclosed by a bounding box containing a portion of the extent function; determining representations of one or more points in screen space, wherein the points are transformed based on a position and a viewing angle of a camera; for each pixel in the image, determining one or more contributing points, which contribute to the colour of the pixel, by determining intersection of a ray cast from the camera with the bounding volume hierarchy, corresponding to the contributing points; and determining the colour of each of the pixels in the image, based on the representations of the respective contributing points in screen space.

According to a second aspect of the invention, there is provided a computer-implemented method of generating a point cloud for rendering an image, the method comprising: receiving a ground truth image; inputting the ground truth image into a trained machine learning model, wherein the trained machine learning model is trained to: generate a plurality of points to form the point cloud, each point comprising an extent defined by a three-dimensional extent function, centred on a centre point, a colour to be rendered over the extent, and a bounding box, by minimising a difference between an image formed by rendering the point cloud using the method of any preceding claim and the ground truth image.

It would be understood by the skilled person that any discussion provided for a first aspect may be applied, where appropriate, to any second aspect.

**BRIEF DESCRIPTION OF DRAWINGS**

Figure 1 shows schematics of a point in a point cloud corresponding to a method described herein;
Figure 2 shows schematics of a point in a point cloud corresponding to a method described herein;
Figures 3 shows a schematic of a rendering process corresponding to a method described herein;
Figures 4 shows a schematic of a rendering process corresponding to a method described herein;
Figures 5 shows a schematic of a rendering process corresponding to a method described herein; and
Figure 6 shows a schematic diagram of the steps of one example method corresponding to a method described herein.

## DETAILED DESCRIPTION

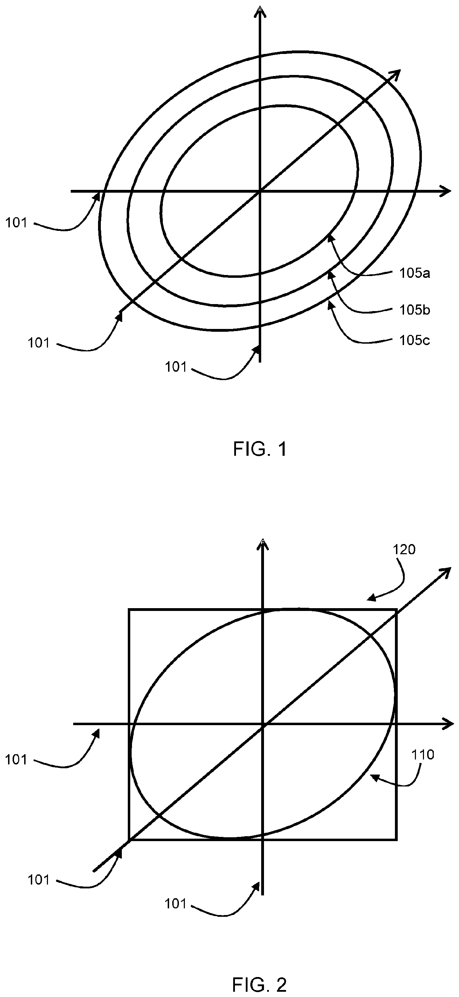

An example schematic of a point which may form part of a point cloud for rendering an image is generally illustrated in Figure 1. Axes 101 are shown to indicate the three dimensions with respect to which the point is defined. The point shown has a visible extent defined by a 3D Gaussian function. The value of the Gaussian function is greater towards the origin of the axes, and lesser further away from the center. This is illustrated by the three concentric shapes 105a-c, showing the shape formed by plotting a surface where the extent function equals 0.25, 0.5, and 0.75 respectively.

When used to render an image, the value of the extent function is used as a modifier to the opacity of the point - the higher the value, the more opaque the point. In this case, the opacity is taken directly as the value of the extent function, which is defined to fall between 0 (fully transparent) and 1 (fully opaque).

The point has a colour defined by a sum of spherical harmonics, defining the visible colour over the extent, which is multiplied by the value of the extent function to result in an opaque colour at the centre and a transparent colour further from the centre.

In Figure 2, an example schematic of a point with a determined bounding box is shown. As in Figure 1, the axes 101 are shown to indicate the basis vectors of the space in which the point is defined. Here, only a single surface 110 is shown, showing the surface where the extent function equals 0.5.

Also depicted is a bounding box 120, enclosing the point. In this example, the bounding box is selected such that it encloses all of the region where the extent function is greater than 0.5 (the extent threshold value is 0.5). Due to the shape of the extent function, this necessarily means that it encloses some regions where the extent function is less than 0.5. In other examples, the bounding box may be determined by different criteria, such as enclosing a region where the extent function is greater than 0.75, or by enclosing a region where the extent function is greater than 0.

In this example, the bounding box is a 3D oriented bounding box, though in other examples it may be an axis-aligned bounding box, or indeed be any arbitrary polyhedron. In such examples, the bounding box may include a smaller region of the point where the extent function is less than the threshold.

In this example, the bounding box is centred on the point, though it would be understood by the skilled person that this is not essential. For instance, in the case of an extent function which is not radially symmetric about the centre, some examples may select a bounding box offset from the centre of the point.

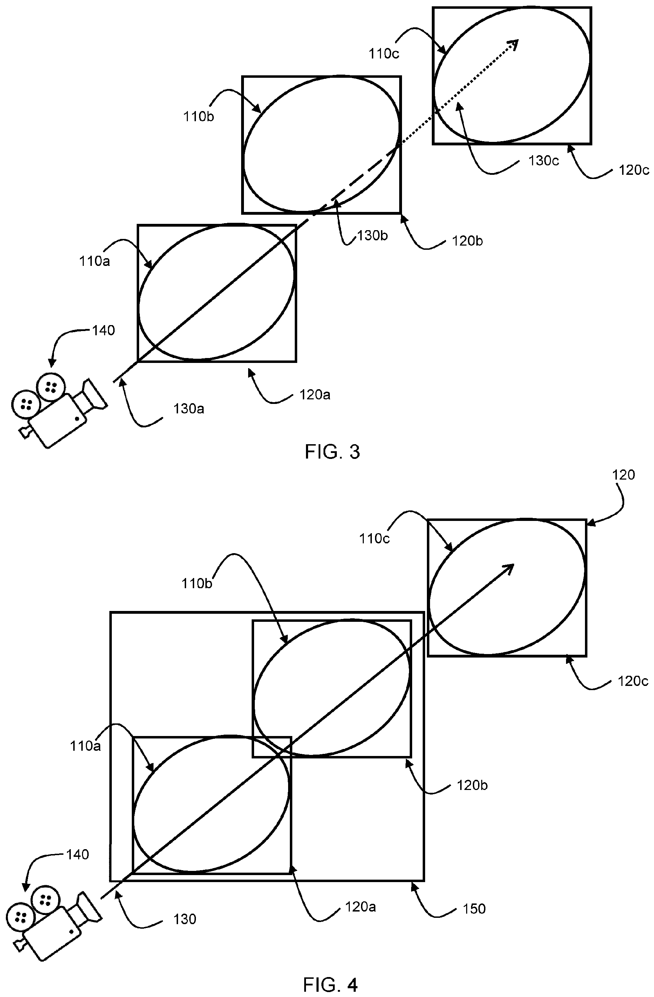

In Figure 3, a schematic representation of a method corresponding to the claimed invention is shown. A ray is traced from a camera 140, and is shown in three segments 130a-c corresponding to its intersection with the three extents 110a-c of three points. Each point has a corresponding axis-aligned bounding box 120a-c, centred on the point. In this example, a bounding volume hierarchy is not used for simplicity, though it is compatible with a bounding volume hierarchy.

The ray 130a-c is traced from the camera 140 in order to determine the colour of a single pixel. The location of the pixel on the screen, combined with the location and rotation of the camera, specifies the direction in which the ray is cast. This ray intersects with the three bounding boxes 120a-c, and accordingly the three points to which those bounding boxes belong are determined to be contributing points. In this example, the colour of the pixel is determined by iteratively accumulating a colour contribution from each contributing point, in order of proximity to the camera.

More specifically, in this example, the colour contribution from each point is an RGBA colour, comprising an opacity stored in the alpha (A) channel. The colour may be fully opaque (A = 1.0), but in general, the colour contribution will be partially opaque (A < 1.0). This is because the ray will not, in general, intersect the point directly at the centre. Therefore, the value of the extent function will be less than 1.0 and the opacity will correspondingly be less than 1.0. In some examples, the colour contribution will further comprise an exponential falloff in opacity as a function of the distance of the intersection of the ray and the extent from the centre of the point, but for simplicity this factor is neglected in this example.

In this example, the colour of the pixel is determined by accumulation, as an iterative function of the currently accumulated colour. The colour of the pixel, before any contributing points are considered, is assumed to be black, which is expressed as (0.0,0.0,0.0,0.0) as an RGBA colour. The four components of the colour are the amount of red, green, blue and alpha respectively, i.e. representing the components of a three-channel additive RBG colour model supplemented with an additional alpha channel for encoding opacity. In other examples, other representations of colour, such as HSL, HSV, HSLA, HSVA , or other representations of colour in different colour spaces, may be used. However, here, RGBA is used for simplicity.

In this example, the accumulation of the colour contributions is performed by the method of "alpha composition". The alpha (opacity) of the resultant colour is calculated first, then this alpha is used to calculate the resultant RGB colour (the remaining three components of the RGBA colour). The resultant alpha can be calculated as such:

$$\alpha'_{\text{total}} = \alpha_{\text{total}} + (1 - \alpha_{\text{total}})\alpha_{\text{point}}$$

where $\alpha'_{\text{total}}$ is the resultant alpha of the resultant colour, $\alpha_{\text{total}}$ is the alpha component of the colour of the pixel accumulated thus far, and $\alpha_{\text{point}}$ is the alpha component of the colour of the point at the intersection of the ray and the extent.

Once the resultant alpha $\alpha'_{\text{total}}$ is found, the three RGB components of the colour, $c'_{\text{total}}$, can be calculated as such:

$$c'_{\text{total}} = \frac{c_{\text{total}}\alpha_{\text{total}} + c_{\text{point}}\alpha_{\text{point}}(1 - \alpha_{\text{total}})}{\alpha'_{\text{total}}}$$

where $c'_{\text{total}}$ is the resultant RGB components of the resultant colour, $c_{\text{total}}$ is the RGB components of the colour of the pixel accumulated thus far, and $c_{\text{point}}$ is the RGB components of the colour of the point at the intersection of the ray and the extent.

In another example, the three RGB components of the colour, $c'_{\text{total}}$, can be calculated as such:

$$c'_{\text{total}} = c_{\text{total}} + c_{\text{point}}\alpha_{\text{point}}(1 - \alpha_{\text{total}}).$$

In this case, such a colour of the point is described by a summation of spherical harmonics, but it could, in other examples, comprise a simple solid colour or another function of distance or angle.

Once $c'_{\text{total}}$ is found, the iteration process then continues with the colour contribution of the next contributing point, from front to back, wherein $c'_{\text{total}}$ is used as $c_{\text{total}}$, and a new $c'_{\text{total}}$ is found. In some examples, the iteration process is stopped when the alpha component $\alpha'_{\text{total}}$ of $c'_{\text{total}}$ is 1.0, i.e. the final accumulated colour of the pixel is fully opaque. In this way, further points are not considered when they cannot contribute to the colour at all, reducing redundant work and increasing the performance of the method.

However, in this example, the iteration process is stopped when the alpha component $\alpha'_{\text{total}}$ is within an opacity threshold of fully opaque. In this example, the opacity threshold is 0.01, meaning that the iteration process is stopped when when the alpha component $\alpha'_{\text{total}}$ is greater than 0.99. In this way, further points are not considered when they can only contribute in a minimal way to the colour, further reducing redundant work and increasing the performance of the method. It is notable that the alpha component $\alpha'_{\text{total}}$ is then considered to be 1.0, rather than remaining some amount below 1.0. This results in a fully opaque final image. In other examples, this assumption may not be made.

In this example, the colour of the first extent 110a at the intersection of the ray is taken to be $c_1 = (1.0,0.0,0.0)$, with opacity $\alpha_1 = 0.8$. That is, a red colour (1.0 in the R channel of the RGBA colour) that is 80% opaque (0.8 in the A channel of the RGBA colour). After accumulating the colour contribution from the first point, the alpha component $\alpha'_{\text{total}} = 0.8 = \alpha_1$, calculated as above. Similarly, the colour of the pixel is calculated to be $c'_{\text{total}} = (1.0,0.0,0.0) = c_1$. This follows because only the first point has contributed so far. As this resultant colour has an alpha component $\alpha'_{\text{total}} = 0.8 < 0.99$, the accumulation process continues.

Accordingly, the contribution of the second extent 110b at the intersection with the corresponding portion of the ray 130b is considered. The colour of the second extent at the intersection is taken as $c_2 = (0.0,1.0,0.0)$, with an alpha component $\alpha_2 = 0.2$. This is a green colour that is only 20% opaque, corresponding to the fact that the ray is intersecting far from the centre of the second point, near the edge of the extent. It is reiterated that these colours are only chosen by way of example and no limitation of the claimed invention in this respect is intended.

Using the equations set out above, the colour of the pixel after accumulating this second contribution is $c'_{\text{total}} = (0.952,0.048,0.0)$, with an alpha component $\alpha'_{\text{total}} = 0.84$. The colour has got more opaque (0.84 > 0.8), and contains a green component now, corresponding to the accumulated green colour from the second point. As this resultant colour has an alpha component $\alpha'_{\text{total}} = 0.84 < 0.99$, the accumulation process continues.

Accordingly, the contribution of the third extent 110c at the intersection with the corresponding portion of the ray 130c is considered. The colour of the third extent at the intersection is taken as $c_3 = (1.0,1.0,1.0)$, with an alpha component $\alpha_3 = 0.98$. This is a white colour that is 98% opaque.

Using the equations set out above, the colour of the pixel after accumulating this third contribution is $c'_{\text{total}} = (0.960,0.198,0.157)$, with an alpha component $\alpha'_{\text{total}} = 0.997$. The colour has got more opaque (0.997 > 0.84), and the proportion of blue and green in the colour has increased, corresponding to the accumulated white colour, which contains all three RGB colour components in equal amounts. As this resultant colour has an alpha component $\alpha'_{\text{total}} = 0.997 > 0.99$, which is within the opacity threshold of 1.0, the accumulation process is halted and the final colour of the pixel has been determined.

In Figure 4, a schematic representation of a method corresponding to the claimed invention is shown. A ray 130 is traced from a camera 140, and intersects with the three extents 110a-c of three points. Each point has a corresponding axis-aligned bounding box 120a-c, centred on the point. Further, in this example, these axis-aligned bounding boxes are part of a bounding volume hierarchy (BVH). Also included in the BVH is a parent bounding box 150, containing two of the bounding boxes 120a, 120b corresponding to the points.

In contrast to the method of Figure 3 as set out above, the method of Figure 4 relies on the BVH to determine the intersection of the ray with the bounding boxes. The BVH encodes that two of the bounding boxes 120a, 120b are contained within a parent bounding box 150. When determining the contributing points to the pixel colour, the method involves first checking the intersection of the ray with any parent bounding boxes before checking the intersection of the ray with any children of the parent. If there is no intersection with the parent bounding box, then there cannot be intersection with the children and checking for such an intersection can be skipped. This improves the efficiency of the method.

Accordingly, first, intersection of the ray with the parent bounding box 150 is checked. As the ray does intersect with the parent bounding box, intersection with the two children 120a, 120b is then checked. In this case, there is also intersection with both children. Separately, intersection with the third bounding box 120c, which does not have a parent, is also checked. The rest of the process then proceeds as discussed above for Figure 3.

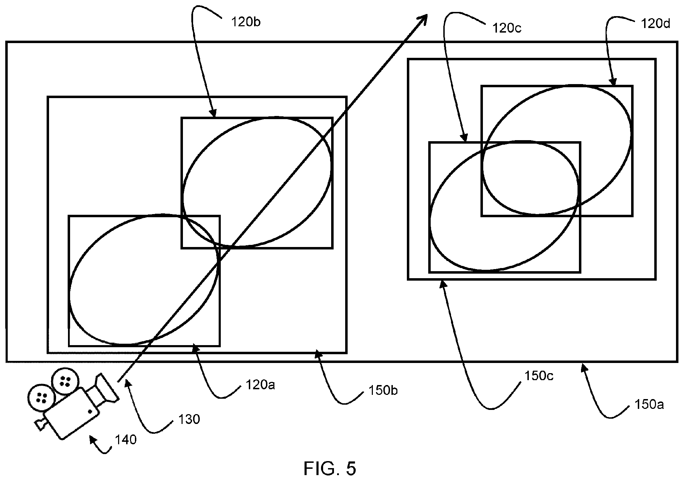

In Figure 5, a schematic representation of a method corresponding to the claimed invention is shown. A ray 130 is traced from a camera 140 towards four points, with four bounding boxes 120a-d. In contrast to Figure 3, a BVH is used to determine intersection with the bounding boxes, and in contrast to Figure 4, there is not intersection with all of the bounding boxes present.

The first intersection tested is with the first parent bounding box 150a, which is the parent of all of the other bounding boxes present. The ray 130 does intersect with the first parent bounding box, so intersection with its immediate children is checked. The ray does intersect with the first-level child bounding box 150b on the left, but does not intersect with the first-level child bounding box 150c on the right. This means that the ray cannot intersect with the second-level children of the first-level child bounding box on the right, and accordingly, intersection with these bounding boxes 120c, 120d is not checked.

However, there is intersection with the first-level child bounding box 150b on the left. Accordingly, intersection with the second-level child bounding boxes 120a, 120b contained within is checked. In this case, there is intersection with both of those bounding boxes. Therefore, in this case, there are two contributing points, corresponding to these two bounding boxes 120a, 120b.

The method then continues with these two contributing points as previously explained.

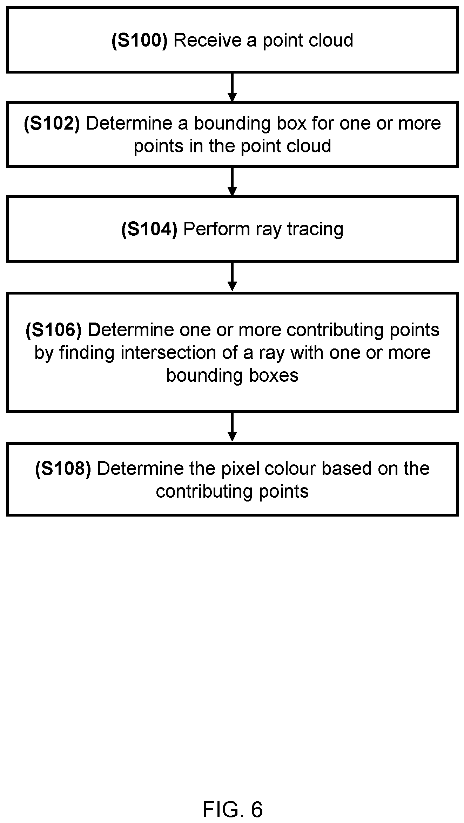

In Figure 6, the steps of one example method for rendering an image with a point cloud are detailed as a flow diagram. The steps of this method may be performed in line with any of the previous discussion. In step S100, a point cloud is received. In step S102, a bounding box is determined for one or more points inside the point cloud. In step S104, ray tracing is performed, involving casting a ray from a "camera", the ray corresponding to a pixel in the final image. In step S106, the intersection of the ray with the bounding boxes is determined, in order to find the contributing points to the colour of the pixel. Finally, in step S108, the colour of the resulting pixel is determined based on the contributing points.

**Claims**

1. A computer-implemented method of rendering an image using a point cloud, the method comprising:

   receiving a point cloud comprising a plurality of points, each point comprising an extent defined by a three-dimensional extent function, centred on a centre point;
   for each of a plurality of points in the point cloud, determining a bounding box enclosing the point;
   performing ray tracing from a camera view from which the image is to be rendered;
   determining one or more contributing points, which contribute to the colour of a pixel in the image, by determining an intersection of a ray with one or more bounding boxes enclosing the contributing points; and
   determining the colour of the pixel based on the contributing points.

2. The method according to claim 1, wherein the colour of the pixel is determined by iteratively accumulating a colour contribution from each contributing point, in order of proximity to the camera.

3. The method according to claim 2, wherein the iterative accumulation is stopped when the accumulated colour contribution is fully opaque; or
   the iterative accumulation is stopped when the opacity of the accumulated colour contribution is within an opacity threshold.

4. The method according to claim 2 or 3, wherein each point further comprises colour data, comprising an opacity, defining a colour to be rendered over the extent, and the colour contribution of each corresponding point comprises the colour of the contributing point at the location it intersects with the ray; and, optionally, the colour data comprises a spherical harmonic.

**5.** The method according to any one of claims 2 to 4, wherein the colour contribution comprises an exponential falloff in opacity calculated from the distance of the intersection of the ray from a centre of the contributing point.

**6.** The method of any preceding claim, wherein the extent of each point is defined by a three-dimensional Gaussian.

**7.** The method according to any preceding claim, wherein the bounding boxes are 3D oriented bounding boxes.

**8.** The method according to any preceding claim, further comprising determining at least one parent bounding box which contains at least one child bounding box; and wherein determining an intersection of the ray with one or more bounding boxes comprises first determining intersection of the ray with each of the one or more parent bounding boxes, and if the ray intersects the parent bounding box, determining intersection of the ray with the respective child bounding boxes.

**9.** The method according to claim 7 or claim 8, wherein the bounding boxes form a bounding volume hierarchy, and determining an intersection of the ray comprises determining intersection of the ray with the bounding volume hierarchy.

**10.** The method according to any preceding claim, wherein the determining a bounding box comprises determining a bounding box centred on the point, enclosing a region where the extent function of the point is greater than a threshold value.

**11.** The method according to any preceding claim, further comprising determining representations of one or more points in screen space, wherein the points are transformed based on a position and a viewing angle of a camera; and wherein the colour of the pixel is determined based on the point representations of the contributing points; and wherein the point representations comprise a screen space conic and screen space radius for each point.

**12.** The method according to claim 11 as dependent on claim 2, wherein the colour contribution of each contributing point is determined from the point representation of the contributing point and a location of intersection with the ray.

**13.** The method of any preceding claim, the method further comprising:

receiving a bounding volume hierarchy corresponding to the points in the point cloud, wherein each point is enclosed by a bounding box containing a portion of the extent function; determining representations of one or more points in screen space, wherein the points are transformed based on a position and a viewing angle of a camera; for each pixel in the image, determining one or more contributing points, which contribute to the colour of the pixel, by determining intersection of a ray cast from the camera with the bounding volume hierarchy, corresponding to the contributing points; and determining the colour of each of the pixels in the image, based on the representations of the respective contributing points in screen space.

**14.** A computer-implemented method of generating a point cloud for rendering an image, the method comprising:

receiving a ground truth image; inputting the ground truth image into a trained machine learning model, wherein the trained machine learning model is trained to: generate a plurality of points to form the point cloud, each point comprising an extent defined by a three-dimensional extent function, centred on a centre point, a colour to be rendered over the extent, and a bounding box, by minimising a difference between an image formed by rendering the point cloud using the method of any preceding claim and the ground truth image.

**15.** A non-transient computer-readable storage medium containing instructions which, when executed by a computer, cause it to carry out the method of any preceding claim.

FIG. 1

FIG. 2

FIG. 3

FIG. 4

FIG. 5

**(S100)** Receive a point cloud

**(S102)** Determine a bounding box for one or more points in the point cloud

**(S104)** Perform ray tracing

**(S106)** Determine one or more contributing points by finding intersection of a ray with one or more bounding boxes

**(S108)** Determine the pixel colour based on the contributing points

FIG. 6

Europäisches
Patentamt

European
Patent Office

Office européen
des brevets

# EUROPEAN SEARCH REPORT

**Application Number**

EP 25 17 7725

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Gao Jian ET AL: "Relightable 3D Gaussian: Real-time Point Cloud Relighting with BRDF Decomposition and Ray Tracing", , 27 November 2023 (2023-11-27), pages 1-18, XP093296171, Retrieved from the Internet: URL:arXiv:2311.16043v1 [retrieved on 2025-07-15] | 1-6,8-15 | INV. G06T15/06 |
| Y | * abstract * * figures 2,3,4 * * section 1 "Introduction", paragraphs 2 and 3 * * section 3.1, subsection "3D Gaussian Splatting" * * section 3.3 * * sections 4.1 and 4.2 * ----- | 7 | |
| | -/-- | | |

TECHNICAL FIELDS
SEARCHED (IPC)

G06T

The present search report has been drawn up for all claims

| Place of search | Date of completion of the search | Examiner |
|---|---|---|
| Berlin | 16 July 2025 | Gauthier, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

## EUROPEAN SEARCH REPORT

**Application Number**

EP 25 17 7725

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | LEE JUNSEO ET AL: "GSCore: Efficient Radiance Field Rendering via Architectural Support for 3D Gaussian Splatting", PROCEEDINGS OF THE 2023 ACM SIGPLAN INTERNATIONAL SYMPOSIUM ON NEW IDEAS, NEW PARADIGMS, AND REFLECTIONS ON PROGRAMMING AND SOFTWARE, ACMPUB27, NEW YORK, NY, USA, 27 April 2024 (2024-04-27), pages 497-511, XP059616816, DOI: 10.1145/3620666.3651385 ISBN: 979-8-4007-0393-5 * figures 2,6,8,9; table 1 * * section 1 "Introduction", paragraphs 4 and 5 * * section 2.2 * * section 3.1, paragraph 1 * * section 3.1, subsection "Rasterization" * * section 3.3, subsections "Observation I" and "Observation III" * * section 4.1 * * section 4.2, paragraph 1 * * section 4.3, paragraphs 1 and 2 * * section 4.4 * * section 5.1 * * section 5.4, paragraphs 1 and 2 * * section 8, subsection "Using RT Cores for Intersection Test" * * section 9, subsection "Ray Tracing Acceleration" * ----- | 7 | |
| | | | **TECHNICAL FIELDS SEARCHED (IPC)** |

The present search report has been drawn up for all claims

| Place of search | Date of completion of the search | Examiner |
|---|---|---|
| Berlin | 16 July 2025 | Gauthier, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)